# FASCICULE DE BREVET EUROPEEN

(11) **EP 2 727 211 B1**
(45) Date de publication et mention de la délivrance du brevet: **26.04.2017**
(21) Numéro de dépôt: 12738536.7
(22) Date de dépôt: 27.06.2012
(51) Int. Cl.: B60L 11/14, B60W 20/11, B60W 20/12, H02J 7/00, H02J 7/14, B60W 10/06, B60W 10/08, B60W 20/00, B60W 10/26, B60W 50/00, B60L 11/18, H01M 10/44, H01M 10/46, B60W 50/14

(54) **PROCÉDÉ ET SYSTÈME DE GESTION D'ÉNERGIE D'UN VÉHICULE HYBRIDE**
VERFAHREN UND SYSTEM ZUR VERWALTUNG DER LEISTUNG EINES HYBRIDFAHRZEUGS
METHOD AND SYSTEM FOR MANAGING THE POWER OF A HYBRID VEHICLE

(30) Priorité: 28.06.2011 FR 1155736
(43) Date de publication de la demande: 07.05.2014
(73) Titulaire: Valeo Systèmes de Contrôle Moteur, 95800 Cergy (FR)
(72) Inventeur: LUTZ, Philippe, F-78100 Le Vesinet (FR); FOURNIGAULT, Damien, 95300 PONTOISE (FR); BOUTROT, Dominique, F-78400 Chatou (FR)
(86) Numéro de dépôt international: PCT/FR2012/051477
(87) Numéro de publication internationale: WO 2013/001233

(56) Documents cités:
- EP-A1- 1 932 740
- FR-A1- 2 953 340
- US-A- 5 778 326
- US-A1- 2006 278 449
- US-A1- 2007 112 475
- US-A1- 2009 277 701

## Description

La présente invention concerne un procédé de gestion d'énergie d'un véhicule hybride. Elle concerne également un système de gestion correspondant.

Plus particulièrement, l'invention concerne le domaine des voitures hybrides.

De manière générale, un véhicule hybride fait appel à une pluralité de sources d'énergie distinctes pour son entraînement. Ces sources comprennent couramment un moteur thermique et un moteur électrique associé à une unité de stockage d'énergie de type batterie.

Par rapport à un véhicule conventionnel à entraînement exclusivement thermique, la présence d'une seconde source d'énergie dans un véhicule hybride introduit un degré de liberté supplémentaire pour obtenir la puissance demandée par le conducteur du véhicule.

Il est donc nécessaire de trouver une manière efficace de mettre à contribution les différentes sources disponibles. En effet, une mauvaise gestion énergétique pourrait résulter en une consommation analogue, voire supérieure à celle d'un véhicule conventionnel équivalent en raison, notamment, du surpoids engendré par le moteur électrique et l'électronique de puissance associée, alors que les véhicules hybrides cherchent à atteindre l'objectif inverse.

Il existe actuellement des procédés de gestion énergétique d'un véhicule automobile hybride permettant une répartition de la puissance demandée par le conducteur entre les différentes sources de manière à minimiser la consommation de carburant ou les émissions de polluants.

Ces procédés commandent notamment les démarrages et/ou arrêts du moteur thermique ainsi que les alternances de phases de recharge et/ou décharge de la batterie.

Les stratégies d'optimisation utilisées aujourd'hui ne prennent pas en compte le trajet effectif suivi par le véhicule. Les commandes générées peuvent alors s'avérer inadaptées au parcours réel du véhicule.

Plus particulièrement, les stratégies existantes d'optimisation du bilan énergétique d'un véhicule hybride s'appliquent à un instant t de roulage pour minimiser la consommation de carburant au point de fonctionnement instantané du groupe motopropulseur défini par un couple et un régime. Cependant, il arrive fréquemment que des contraintes considérées comme étant de priorité supérieure, notamment la recharge de la batterie, imposent un mode d'entraînement qui est préjudiciable vis-à-vis des gains de consommation.

Généralement, dans les stratégies existantes, les conditions de roulage à l'instant t vont dicter le choix de la source du couple moteur, à savoir favoriser, en milieu urbain, la traction électrique pure et privilégier, en milieu extra-urbain, notamment sur autoroute, la traction par le moteur thermique. Cependant, c'est le niveau de charge de la batterie à l'instant t qui impose en dernier lieu le choix de la source de traction. Par exemple, en milieu urbain, dès que la batterie atteint un niveau de charge, dit SOC ("State Of Charge"), représentant un niveau de décharge maximum autorisé, préétabli et fixe, le moteur thermique est démarré pour recharger la batterie bien que ce démarrage soit pénalisant pour la consommation et les émissions de polluants.

Or, les niveaux de décharge maximum autorisés sont souvent définis à des niveaux faibles (seuil minimum de charge résiduelle de l'ordre de 70%) afin d'éviter des décharges prolongées des batteries et assurer une sécurité d'approvisionnement optimale en énergie électrique au cours du trajet. Or, ces faibles niveaux de décharge minimisent les gains potentiels en diminution des émissions polluantes.

On identifiera ici le document FR 2 953 340 A1 (PEUGEOT CITROEN AUTOMOBILES SA) décrivant selon les termes des revendications indépendantes 1 et 12 un procédé de gestion d'énergie d'un véhicule hybride entraîné sélectivement par un moteur électrique et par un moteur thermique, le moteur électrique étant alimenté en énergie à partir d'une unité de stockage d'énergie électrique apte à être rechargée à partir du moteur thermique, procédé dans lequel on surveille un niveau de charge de l'unité de stockage d'énergie pour sélectionner un mode d'entraînement par le moteur thermique ou le moteur électrique, ledit procédé comprenant les étapes de :
- détermination d'un profil de parcours du véhicule associé à un trajet dudit véhicule ; et
- détermination en fonction dudit profil de parcours d'un niveau de charge seuil, dit seuil autorisé, en dessous duquel on active un mode d'entraînement par le moteur thermique,
dans lequel l'étape de détermination du profil de parcours comprend la détermination de la distance, de la durée du trajet entre un point de départ et un point d'arrivée définis.

Ce document décrit également le système de gestion d'énergie correspondant.

On identifiera également ici le document US 2007/112475 A1 (KOEBLER MARTIN [DE] ET AL) qui a aussi pour objet l'optimisation du besoin de la puissance d'entraînement d'un véhicule hybride.

La présente invention vise à améliorer la situation. L'invention est définie par les caractéristiques des revendications indépendantes 1 et 12. Les modes de réalisations sont définis par les revendications dépendantes.

A cet effet, l'invention concerne tout d'abord un procédé de gestion d'énergie d'un véhicule hybride entraîné sélectivement par un moteur électrique et par un moteur thermique, le moteur électrique étant alimenté en énergie à partir d'une unité de stockage d'énergie électrique apte à être rechargée à partir du moteur thermique, procédé dans lequel on surveille un niveau de charge de l'unité de stockage d'énergie pour sélectionner un mode d'entraînement par le moteur thermique ou le moteur électrique, ledit procédé comprenant les étapes de :
- détermination d'un profil de parcours du véhicule associé à un trajet dudit véhicule ; et
- détermination en fonction dudit profil de parcours d'un niveau de charge seuil, dit seuil autorisé, en dessous duquel on active le mode d'entraînement par le moteur thermique.

En prenant en compte le parcours de parcours, on peut adapter le seuil de décharge maximum autorisé aux paramètres du trajet à venir et donc augmenter le potentiel de diminution de consommation, tout en maîtrisant les risques de décharge trop importante de la batterie lors de ce trajet.

Avantageusement, le procédé comprend une étape de commande de la recharge de l'unité de stockage si le niveau de charge passe en dessous du seuil autorisé, ladite commande de la recharge comprenant une commande de démarrage du moteur thermique.

Ainsi, la recharge de l'unité de stockage peut être commandée pour se produire dans des conditions de roulage optimales du point de vue de la consommation de carburant et de l'émission de polluants.L'invention comporte également l'étape de détermination du profil de parcours comprend la détermination de la nature du trajet entre un point de départ et un point d'arrivée définis. L'invention comporte également la nature du trajet est choisie parmi au moins un trajet comprenant une portion extra-urbaine et un trajet ne comprenant pas de portion extra-urbaine. Une portion extra-urbaine correspond à une portion de voie rapide dans laquelle la vitesse du véhicule peut être supérieure à un seuil de vitesse prédéfini.

Par exemple, la nature du trajet est déterminée à partir du profil de vitesse maximale sur le trajet. En particulier, le profil de vitesse maximale peut être constitué des vitesses maximales autorisées sur le trajet telles que les limitations de vitesse. Ainsi, une portion du trajet ayant une vitesse limitée supérieure à 90km/h, voire supérieure à 50km/h, peut être considérée comme une portion de voie rapide. Le profil de vitesse est notamment fourni par un système de cartographie ou un système GPS ("Global Positioning System"). L'invention comporte également l'étape de détermination du profil de parcours comprend la détermination de la distance et de la durée du trajet, et la nature du trajet est déterminée à partir de la vitesse moyenne sur le trajet, ladite vitesse moyenne étant obtenue à partir de ladite distance et de ladite durée.

En particulier, si la vitesse moyenne sur le trajet est supérieure à un seuil de vitesse moyenne, le trajet comprend une portion extra-urbaine ; si la vitesse moyenne est inférieure au seuil de vitesse moyenne, le trajet ne comprend pas de portion extra-urbaine. Le seuil de vitesse moyenne est égal par exemple à 25km/h, voire à 30 km/h. Avantageusement, le seuil de vitesse moyenne est calibrable de sorte qu'il est possible de le modifier.

Avantageusement, lorsque le trajet comprend une portion extra-urbaine, la détermination du profil de parcours comprend la détermination de la durée du trajet entre le point de départ et le début de la portion extra-urbaine, la détermination du seuil autorisé consistant à fixer ledit seuil autorisé à un premier seuil pendant cette durée et fixer ledit seuil autorisé à un deuxième seuil supérieur au premier seuil, après cette durée.

Le premier seuil est, de préférence, compris entre 20% et 30%.

Le deuxième seuil assure une sécurité d'approvisionnement électrique optimale du véhicule. Le deuxième seuil est, de préférence, compris entre 60% et 80%.

En fixant un seuil inférieur avant la portion extra-urbaine, le démarrage du moteur thermique peut être retardé lorsque le véhicule est dans sa phase de trajet urbain. On favorise ainsi la recharge de la batterie lors de la phase de trajet autoroutier, phase pendant laquelle une telle recharge s'effectue avec un meilleur rendement énergétique global. Cela permet en outre une phase de roulage autoroutier plus optimale car elle est de meilleur rendement avec le moteur thermique.

Dans un mode de réalisation, le premier seuil est fonction de la durée du trajet entre le point de départ et le début de la portion extra-urbaine. Ainsi, on peut utiliser la durée avant l'accès à l'autoroute comme paramètre de pondération du seuil autorisé.

Avantageusement, le seuil autorisé est égal à un troisième seuil supérieur ou égal au premier seuil et inférieur au deuxième seuil, lorsque le trajet ne comprend pas de portion extra-urbaine.

Le troisième seuil est avantageusement compris entre 40% et 50%.

Un trajet ne comprenant pas de portion extra-urbaine est typiquement un trajet en milieu urbain dans lequel un entraînement par le moteur électrique est privilégié. Un démarrage du moteur thermique se traduit par une pénalité en consommation et par une pollution, le catalyseur étant thermiquement non actif. Dans les procédés de l'art antérieur, un démarrage peut se produire alors que la batterie peut supporter la légère décharge supplémentaire nécessaire à l'atteinte d'une destination visée. Un seuil autorisé particulier à un trajet ne comprenant pas de portion extra-urbaine permet notamment d'augmenter la décharge de batterie permise. Ainsi, on évite un démarrage du moteur thermique trop précoce.

Avantageusement, le point de départ et/ou le point d'arrivée sont définis par leurs coordonnées géographiques, notamment leurs coordonnées GPS et/ou une cartographie.

De préférence, le point d'arrivée est saisi par un utilisateur, typiquement le conducteur du véhicule.

L'invention concerne également un système de gestion d'énergie d'un véhicule hybride entraîné sélectivement par un moteur électrique et par un moteur thermique, le moteur électrique étant alimenté en énergie à partir d'une unité de stockage d'énergie électrique apte à être rechargée à partir du moteur thermique, ledit système comprenant :
- une unité de surveillance d'un niveau de charge de l'unité de stockage d'énergie pour sélectionner un mode d'entraînement par le moteur thermique ou le moteur électrique ;
- une unité de détermination d'un profil de parcours du véhicule associé à un trajet dudit véhicule ; et
- une unité de détermination d'un niveau de charge seuil dit seuil autorisé en dessous duquel on active le mode d'entraînement par le moteur thermique, en fonction dudit profil de parcours,
la détermination du profil de parcours comprend la détermination de la distance, de la durée et de la nature du trajet entre un point de départ et un point d'arrivée définis, et la nature du trajet est choisie parmi au moins un trajet comprenant une portion extra-urbaine et un trajet ne comprenant pas de portion extra-urbaine, et l'étape de détermination du profil de parcours comprend la détermination de la distance et de la durée du trajet, et la nature du trajet est déterminée à partir de la vitesse moyenne sur le trajet, ladite vitesse moyenne étant obtenue à partir de ladite distance et de ladite durée. Avantageusement, l'unité de détermination d'un profil de parcours comprend un dispositif de localisation, notamment un GPS, et/ou une cartographie.

De préférence, le système comprend en outre une unité de communication avec un utilisateur du véhicule, en particulier une interface homme-machine.

Des modes de réalisation de l'invention vont maintenant être décrits de façon plus précise, mais non limitative, en regard des dessins annexés sur lesquels :
- la figure 1 est un schéma représentant la structure d'un système de gestion d'énergie selon un mode de réalisation de l'invention ;
- la figure 2 est un organigramme illustrant les étapes du procédé de gestion d'énergie selon une première variante de réalisation de l'invention ;
- la figure 3 est un organigramme illustrant les étapes du procédé de gestion d'énergie selon une deuxième variante de réalisation de l'invention ;
- la figure 4 est un graphique illustrant un exemple de mise en oeuvre d'un procédé de gestion d'énergie de l'état de la technique ; et
- la figure 5 est un graphique illustrant un exemple de mise en oeuvre du procédé de gestion d'énergie de l'invention.

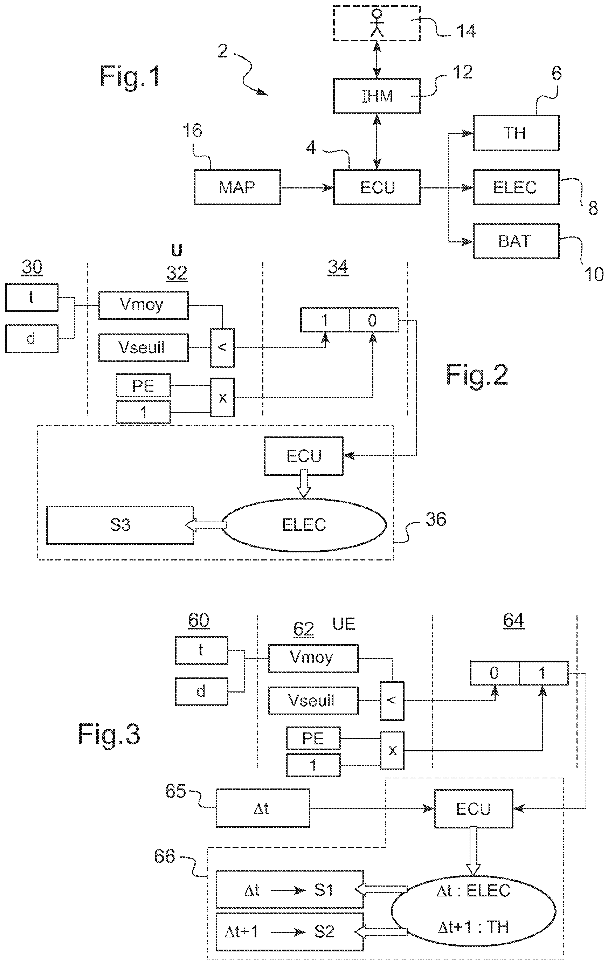

La figure 1 illustre un système de gestion 2 d'énergie d'un véhicule automobile, par exemple hybride. Ce système de gestion est, de préférence, embarqué dans le véhicule.

Le système de gestion 2 comprend une unité de gestion d'énergie telle qu'une unité centrale ECU 4.

L'unité de gestion d'énergie 4 est raccordée à une chaîne motrice du véhicule. La chaîne motrice ("powertrain" en anglais) comprend des moteurs de traction/ propulsion, notamment un moteur thermique 6, un moteur électrique 8, et une chaîne de transmission.

L'unité de gestion d'énergie 4 est également raccordée à une unité de stockage d'énergie, notamment une batterie 10 dont elle surveille le niveau de charge.

De préférence, l'unité de gestion d'énergie 4 est raccordée à une interface homme-machine IHM 12 lui permettant de communiquer avec un conducteur 14 du véhicule.

L'interface homme-machine 12 permet ainsi d'informer le conducteur 14 de l'état de la consommation de carburant, du niveau de charge de la batterie 10, du coût d'énergie, de l'émission de CO₂, de l'empreinte de carbone, etc.

De son côté, le conducteur 14 peut saisir, au moyen de l'interface homme-machine 12, des informations à destination de l'unité de gestion d'énergie 4.

Selon une réalisation préférée, le système de gestion 2 comprend également un système GPS raccordé à l'unité de gestion d'énergie 4 ou un système de cartographie 16 apte à déterminer un trajet à suivre à partir d'un lieu de départ et d'un lieu d'arrivée.

De manière remarquable, l'unité de gestion d'énergie 4 prend en compte un profil de parcours saisi par le conducteur 14 à travers l'interface homme-machine 12 et/ou issu du système GPS ou du système de cartographie 16 pour déterminer un niveau de charge seuil, dit seuil autorisé de la batterie 10 en dessous duquel le mode d'entraînement par le moteur thermique 6 doit être activé.

Le profil de parcours est défini, par exemple, par la distance, la durée et la nature du trajet entre un point de départ et un point d'arrivée définis par leurs coordonnées géographiques, notamment leurs coordonnées GPS.

Le point de départ correspond à la position du véhicule lors de son démarrage et le point d'arrivée correspond à la position de destination du véhicule. Ce point d'arrivée peut être saisi par le conducteur 14 via l'interface homme-machine 12.

La figure 3 est un organigramme illustrant le fonctionnement du procédé de l'invention, lorsque le profil de parcours correspond à un trajet UE comprenant une portion urbaine PU suivie d'une portion extra-urbaine PE, c'est-à-dire une portion de voie rapide telle qu'une portion d'autoroute.

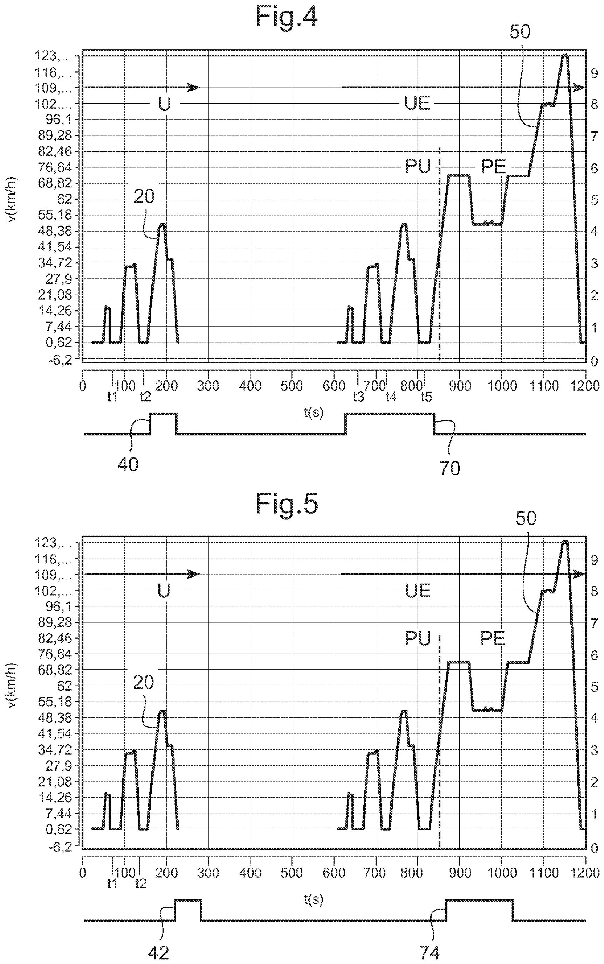

Le profil de vitesse associé au trajet UE est représenté sur la courbe 50 des figures 4 et 5.

La courbe 50 fait apparaître une portion urbaine PU pendant le temps compris entre 600 et 850 s et une portion extra-urbaine PE pendant le temps compris entre 850 et 1200 s.

Le profil de vitesse fait apparaître des arrêts fréquents du véhicule pendant la portion urbaine PU du trajet, par exemple aux instants t3, t4 et t5. La vitesse maximale du véhicule sur cette portion urbaine ne dépasse pas 50 km/h.

Pendant la portion extra-urbaine PE, il n'y a aucun arrêt du véhicule et la vitesse reste toujours supérieure à 50 km/h.

Par exemple, la nature du trajet est déterminée à partir d'une comparaison de la vitesse moyenne Vmoy sur le trajet avec un seuil de vitesse moyenne Vseuil.

Le seuil de vitesse moyenne Vseuil peut être déterminé à partir d'une durée, dite durée maximale, et d'une distance, dite distance maximale, typiques d'un trajet en milieu urbain. Une durée maximale est égale de préférence à 35 minutes. Une distance maximale est de préférence comprise entre 15 et 18 km. Ces valeurs conduisent à un seuil de vitesse moyenne Vseuil sur le parcours de 25 à 30 km/h autorisant ou non un roulage en mode électrique pur.

Lors d'une étape 60, le conducteur 14 rentre sur l'interface homme-machine 12 la durée t du trajet UE. Il rentre également la distance d du trajet UE. A titre d'exemple, la distance d du trajet UE est égale à 15 km et sa durée t est de l'ordre de 12 minutes.

En variante, ces informations peuvent être directement issues du système GPS et/ou du système de cartographie 16 et directement transmises vers l'unité de gestion d'énergie 4.

Lors d'une étape 62, l'unité de gestion 4 détermine la vitesse moyenne Vmoy sur le trajet, soit une vitesse moyenne Vmoy sur le parcours de 75 km/h, et la compare au seuil de vitesse moyenne Vseuil.

A l'étape 64, l'unité de gestion 4 détermine que la vitesse moyenne Vmoy est largement au-dessus du seuil de 30km/h. Donc une portion extra-urbaine est prévue dans le trajet UE.

A l'étape 65, l'unité de gestion 4 détermine la durée Δt du trajet entre le point de départ et le début de la portion extra-urbaine PE.

L'unité de gestion 4 décide alors, à l'étape 66, que le niveau de charge seuil autorisé pour le trajet à venir est égal à un premier seuil S1 de 20 à 30% pendant la durée Δt en parcours urbain PU et un deuxième seuil S2 de 60 à 80% après la durée Δt. Ainsi, l'unité de gestion 4 est configurée pour inhiber le moteur thermique 6 en privilégiant l'utilisation du moteur électrique 8 pendant la durée Δt avant l'accès à l'autoroute.

L'unité de gestion 4 est également configurée pour décider d'activer le moteur thermique 6 après la durée Δt (c'est-à-dire à Δt+1) dès que le deuxième seuil S2 est atteint. Ainsi, la batterie 10 peut être rechargée, si nécessaire, pendant la durée de la portion extra-urbaine PE.

Le deuxième seuil S2 a de préférence une valeur assurant une sécurité d'approvisionnement électrique optimale. Dans les stratégies de l'état de la technique, dès que le niveau de charge de la batterie 10 passe en dessous de ce seuil S2, le moteur thermique 6 est démarré afin de recharger la batterie 10 et ce quelle que doit la durée et/ou la distance du trajet.

La courbe 70 de la figure 4 illustre une activation du moteur thermique très peu de temps après le démarrage du véhicule. Dans ce cas, les conditions de fonctionnement du moteur thermique 6 ne sont pas optimales en raison du démarrage à froid sur un trajet urbain. Cela se traduit par une consommation de carburant et une pollution accrues.

A l'inverse, en utilisant le procédé de l'invention déterminant un premier seuil autorisé S1 inférieur au deuxième seuil S2, bien que le niveau de charge de la batterie soit descendu en dessous du deuxième seuil S2, la recharge de la batterie 10 n'est pas réalisée pendant la durée Δt entre le point de départ et le début de portion extra-urbaine PE. Cette recharge est en effet reportée car le système de gestion de l'invention a une connaissance de conditions de roulage à venir plus favorables, à savoir la portion extra-urbaine PE à venir.

Ainsi que l'illustre la courbe 74, la recharge de la batterie 10 est ainsi réalisée lors du roulage dans la portion extra-urbaine PE. Cela permet un rendement optimal du moteur thermique 6 en termes d'émission de polluants.

La figure 2 est un organigramme illustrant un exemple de fonctionnement du procédé de l'invention, lorsque le profil de parcours correspond à un trajet uniquement urbain U, c'est-à-dire ne comprenant pas de portion extra-urbaine PE.

Par exemple, la nature du trajet est déterminée à partir d'une comparaison de la vitesse moyenne sur le trajet avec un seuil de vitesse moyenne de 30 km/h.

Lors d'une étape 30, le conducteur 14 rentre sur l'interface homme-machine 12 la durée t du trajet U. Il rentre également la distance d du trajet U. Ces informations sont transmises vers l'unité de gestion d'énergie 4.

En variante, ces informations peuvent être directement issues du système GPS et/ou du système de cartographie 16 et directement transmises vers l'unité de gestion d'énergie 4.

Lors d'une étape 32, l'unité de gestion 4 calcule la vitesse moyenne Vmoy du véhicule sur le trajet à partir de la distance d et la durée t du trajet et la compare au seuil de vitesse moyenne Vseuil.

A l'étape 34, l'unité de gestion 4 (ECU dans cet exemple) détermine que la vitesse moyenne Vmoy est inférieure au seuil de vitesse moyenne Vseuil et donc que le trajet U ne comporte pas de portion extra-urbaine PE.

L'unité de gestion 4 décide alors, à l'étape 36, que, pour le trajet à venir, le niveau de charge minimum de la batterie 10 est fixé à un troisième seuil S3 supérieur ou égal au premier seuil S1, et inférieur au deuxième seuil S2. Par exemple, le troisième seuil S3 est compris entre 40% et 50%. Le système est ainsi configuré pour inhiber le moteur thermique 6 en privilégiant l'utilisation du moteur électrique 8, tant que le niveau de charge de la batterie 10 est supérieur au troisième seuil S3. Pendant le trajet, le niveau de charge est surveillé en permanence et comparé au troisième seuil S3.

Le troisième seuil S3 est, de préférence, supérieur au premier seuil S1 utilisé pendant la durée Δt dans un trajet ayant une portion extra-urbaine PE. En effet, dans un trajet comprenant une portion extra-urbaine PE, il est possible d'autoriser une plus grande décharge de la batterie 10 sachant que l'entrée dans la portion extra-urbaine PE va permettre de recharger la batterie 10.

Le troisième seuil S3 est inférieur au seuil autorisé S2 assurant une sécurité d'approvisionnement électrique optimale, généralement utilisé dans l'état de la technique, qui est compris entre 60% et 80%.

Dans les stratégies de l'état de la technique, dès que le niveau de charge de la batterie passe en dessous du seuil autorisé S2, le moteur thermique est démarré afin de recharger la batterie 10 et ce quelle que doit la nature du trajet, trajet comprenant pas une portion extra-urbaine PE ou trajet ne comprenant pas une portion extra-urbaine PE.

A titre d'exemple, la distance du trajet U est égale à moins de 2 km et sa durée est de l'ordre de 4,5 minutes pour une vitesse moyenne de 24 km/h. Un exemple de profil de vitesse associé au trajet urbain U est représenté sur la courbe 20 des figures 4 et 5.

Ce profil de vitesse fait apparaître des arrêts fréquents du véhicule, par exemple aux instants t1 et t2. La vitesse maximale du véhicule sur ce trajet ne dépasse pas 50 km/h.

La courbe 40 de la figure 4 illustre un démarrage du moteur thermique 6 très peu de temps (une minute environ) avant l'arrivée du véhicule à destination. Dans ce cas, l'activation du moteur thermique 6 est très pénalisante en termes de consommation de carburant et d'émission de polluants. En outre, le temps de roulage étant trop court, la batterie 10 n'est pas complètement rechargée.

A l'inverse, en utilisant le procédé de l'invention déterminant un troisième seuil autorisé S3 inférieur au deuxième seuil S2, le trajet se fait intégralement sur le moteur électrique 8, bien que le niveau de charge de la batterie 10 soit descendu en dessous du deuxième seuil S2, ce qui minimise les émissions de polluants. La batterie 10 pourra être rechargée soit sur le lieu de destination finale (courbe 42) si cela est possible techniquement par branchement sur un réseau électrique fixe, ou lors du trajet suivant, si nécessaire.

## Revendications

1. Procédé de gestion d'énergie d'un véhicule hybride entraîné sélectivement par un moteur électrique (8) et par un moteur thermique (6), le moteur électrique (8) étant alimenté en énergie à partir d'une unité de stockage (10) d'énergie électrique apte à être rechargée à partir du moteur thermique (6), procédé dans lequel on surveille un niveau de charge de l'unité de stockage (10) d'énergie pour sélectionner un mode d'entraînement par le moteur thermique (6) ou le moteur électrique (8), ledit procédé comprenant les étapes de :
- détermination d'un profil de parcours du véhicule associé à un trajet dudit véhicule ; et
- détermination (36, 66) en fonction dudit profil de parcours d'un niveau de charge seuil (S1, S2, S3), dit seuil autorisé, en dessous duquel on active un mode d'entraînement par le moteur thermique (6),
dans lequel l'étape de détermination du profil de parcours comprend la détermination (30, 32) de la distance (d), de la durée (t) et de la nature du trajet entre un point de départ et un point d'arrivée définis, et
la nature du trajet est choisie parmi au moins un trajet comprenant une portion extra-urbaine (PE) et un trajet ne comprenant pas de portion extra-urbaine (PE), et
l'étape de détermination du profil de parcours comprend la détermination (30) de la distance (d) et de la durée (t) du trajet, et la nature du trajet est déterminée (32) à partir de la vitesse moyenne (Vmoy) sur le trajet, ladite vitesse moyenne (Vmoy) étant obtenue à partir de ladite distance (d) et de ladite durée (t).

2. Procédé selon la revendication 1, comprenant une étape de commande de la recharge de l'unité de stockage (10) si le niveau de charge passe en dessous du seuil autorisé (S1, S2, S3), ladite commande de la recharge comprenant une commande de démarrage du moteur thermique (6).

3. Procédé selon la revendication 1, dans lequel la nature du trajet est déterminée à partir du profil de vitesse sur le trajet.

4. Procédé selon la revendication 1, dans lequel si la vitesse moyenne (Vmoy) sur le trajet est supérieure à un seuil de vitesse moyenne (Vseuil), le trajet comprend une portion extra-urbaine (PE) ; et
si la vitesse moyenne (Vmoy) est inférieure au seuil de vitesse moyenne (Vseuil), le trajet ne comprend pas de portion extra-urbaine (PE).

5. Procédé selon l'une quelconque des revendications 1 à 4, dans lequel, lorsque le trajet comprend une portion extra-urbaine (PE), la détermination du profil de parcours comprend la détermination (65) de la durée (Δt) du trajet entre le point de départ et le début de la portion extra-urbaine (PE),
la détermination (66) du seuil autorisé consistant à fixer ledit seuil autorisé à un premier seuil (S1) pendant cette durée (Δt) ; et fixer ledit seuil autorisé à un deuxième seuil (S2) supérieur au premier seuil (S1), après cette durée (Δt).

6. Procédé selon la revendication 5, dans lequel le premier seuil (S1) est compris entre 20% et 30%.

7. Procédé selon la revendication 5 ou 6, dans lequel le deuxième seuil (S2) est compris entre 60% et 80%.

8. Procédé selon l'une des revendications 5 à 7, dans lequel le seuil autorisé est égal à un troisième seuil (S3) supérieur ou égal au premier seuil (S1) et inférieur au deuxième seuil (S2), lorsque le trajet ne comprend pas de portion extra-urbaine (PE).

9. Procédé selon la revendication 8, dans lequel le troisième seuil (S3) est compris entre 40% et 50%.

10. Procédé selon l'une quelconque des revendications 1 à 9, dans lequel le point de départ et/ou le point d'arrivée sont définis par leurs coordonnées géographiques, notamment leurs coordonnées GPS.

11. Procédé selon la revendication 10, dans lequel le point d'arrivée est saisi par un utilisateur (14).

12. Système de gestion (2) d'énergie d'un véhicule hybride entraîné sélectivement par un moteur électrique (8) et par un moteur thermique (6), le moteur électrique (8) étant alimenté en énergie à partir d'une unité de stockage (10) d'énergie électrique apte à être rechargée à partir du moteur thermique (6), ledit système (2) comprenant :
- une unité de surveillance d'un niveau de charge de l'unité de stockage (10) d'énergie pour sélectionner un mode d'entraînement par le moteur thermique (6) ou le moteur électrique (6);
- une unité de détermination d'un profil de parcours du véhicule associé à un trajet dudit véhicule ; et
- une unité de détermination d'un niveau de charge seuil (S1, S2, S3) dit seuil autorisé en dessous duquel on active un mode d'entraînement par le moteur thermique (6), en fonction dudit profil de parcours,
la détermination du profil de parcours comprend la détermination (30, 32) de la distance (d), de la durée (t) et de la nature du trajet entre un point de départ et un point d'arrivée définis, et
la nature du trajet est choisie parmi au moins un trajet comprenant une portion extra-urbaine (PE) et un trajet ne comprenant pas de portion extra-urbaine (PE), et l'étape de détermination du profil de parcours comprend la détermination (30) de la distance (d) et de la durée (t) du trajet, et la nature du trajet est déterminée (32) à partir de la vitesse moyenne (Vmoy) sur le trajet, ladite vitesse moyenne (Vmoy) étant obtenue à partir de ladite distance (d) et de ladite durée (t).

13. Système selon la revendication 12, dans lequel l'unité de détermination d'un profil de parcours comprend un dispositif de localisation (16), notamment un GPS et/ou une cartographie.

14. Système selon la revendication 12 ou 13, comprenant en outre une unité de communication avec un utilisateur du véhicule, en particulier une interface homme-machine (12).

## Patentansprüche

1. Verfahren zur Verwaltung der Energie eines Hybridfahrzeugs, das selektiv durch einen Elektromotor (8) und durch einen Verbrennungsmotor (6) angetrieben wird, wobei der Elektromotor (8) ausgehend von einer Einheit zum Speichern elektrischer Energie (10) mit Energie versorgt wird, die geeignet ist, ausgehend von dem Verbrennungsmotor (6) aufgeladen zu werden, wobei bei dem Verfahren ein Ladestand der Einheit zum Speichern elektrischer Energie (10) überwacht wird, um einen Antriebsmodus durch den Verbrennungsmotor (6) oder den Elektromotor (8) auszuwählen, wobei das Verfahren die folgenden Schritte aufweist:
- Bestimmen eines Streckenprofils des Fahrzeugs, das mit einer Fahrstrecke des Fahrzeugs verbunden wird; und
- Bestimmen (36, 66) in Abhängigkeit von dem Streckenprofil eines Schwellenladestandes (S1, S2, S3), dem sogenannten zugelassenen Schwellenwert, unter dem ein Antriebsmodus durch den Verbrennungsmotor (6) aktiviert wird,
wobei der Schritt des Bestimmens des Streckenprofils das Bestimmen (30, 32) der Entfernung (d), der Zeitdauer (t) und der Art der Fahrstrecke zwischen einem definierten Ausgangspunkt und einem definierten Ankunftspunkt aufweist, und
die Art der Fahrstrecke aus mindestens einer Fahrstrecke, die einen außerstädtischen Abschnitt (PE) aufweist, und einer Fahrstrecke, die keinen außerstädtischen Abschnitt (PE) aufweist, ausgewählt wird, und
der Schritt des Bestimmens des Streckenprofils das Bestimmen (30) der Entfernung (d) und der Zeitdauer (t) der Fahrstrecke aufweist, und die Art der Fahrstrecke ausgehend von der Durchschnittsgeschwindigkeit (Vmittel) auf der Fahrstrecke bestimmt wird (32), wobei die Durchschnittsgeschwindigkeit (Vmittel) aus dem Abstand (d) und der Zeitdauer (t) erhalten wird.

2. Verfahren nach Anspruch 1, umfassend einen Steuerschritt des Aufladens der Einheit zum Speichern (10), wenn der Ladestand unter den zugelassenen Schwellenwert (S1, S2, S3) abfällt, wobei das Steuern des Aufladens einen Startbefehl des Verbrennungsmotors (6) aufweist.

3. Verfahren nach Anspruch 1, wobei die Art der Fahrstrecke ausgehend von dem Geschwindigkeitsprofil auf der Fahrstrecke bestimmt wird.

4. Verfahren nach Anspruch 1, wobei, wenn die Durchschnittsgeschwindigkeit (Vmittel) auf der Fahrstrecke höher als ein Schwellenwert der Durchschnittsgeschwindigkeit (VSchwell) ist, die Fahrstrecke einen außerstädtischen Abschnitt (PE) aufweist; und
wenn die Durchschnittsgeschwindigkeit (Vmittel) niedriger als der Schwellenwert der Durchschnittsgeschwindigkeit (VSchwell) ist, die Fahrstrecke keinen außerstädtischen Abschnitt (PE) aufweist.

5. Verfahren nach einem der Ansprüche 1 bis 4, wobei, wenn die Fahrstrecke einen außerstädtischen Abschnitt (PE) aufweist, das Bestimmen des Streckenprofils das Bestimmen (65) der Zeitdauer (Δt) der Fahrstrecke zwischen dem Ausgangspunkt und dem Ankunftspunkt des außerstädtischen Abschnitts (PE) aufweist,
wobei das Bestimmen (66) des zugelassenen Schwellenwertes darin besteht, den zugelassenen Schwellenwert während dieser Zeitdauer (Δt) auf einen ersten Schwellenwert (S1) festzulegen; und den zugelassenen Schwellenwert nach dieser Zeitdauer (Δt) auf einem zweiten Schwellenwert (S2) festzulegen, der höher als der erste Schwellenwert (S1) ist.

6. Verfahren nach Anspruch 5, wobei der erste Schwellenwert (S1) zwischen 20 % und 30 % liegt.

7. Verfahren nach Anspruch 5 oder 6, wobei der zweite Schwellenwert (S2) zwischen 60 % und 80 % liegt.

8. Verfahren nach einem der Ansprüche 5 bis 7, wobei der zugelassene Schwellenwert gleich einem dritten Schwellenwert (S3) ist, der höher als der oder gleich dem erste(n) Schwellenwert (S1) und niedriger als der zweite Schwellenwert (S2) ist, wenn die Fahrstrecke keinen außerstädtischen Abschnitt (PE) aufweist.

9. Verfahren nach Anspruch 8, wobei der dritte Schwellenwert (S3) zwischen 40 % und 50 % liegt.

10. Verfahren nach einem der Ansprüche 1 bis 9, wobei der Ausgangspunkt und/oder der Ankunftspunkt durch ihre geographischen Koordinaten, insbesondere ihre GPS-Koordinaten, definiert werden.

11. Verfahren nach Anspruch 10, wobei der Ankunftspunkt von einem Benutzer (14) eingegeben wird.

12. System zur Verwaltung (2) der Energie eines Hybridfahrzeugs, das selektiv durch einen Elektromotor (8) und durch einen Verbrennungsmotor (6) angetrieben wird, wobei der Elektromotor (8) ausgehend von einer Einheit zum Speichern elektrischer Energie (10) mit Energie versorgt wird, die geeignet ist, ausgehend von dem Verbrennungsmotor (6) aufgeladen zu werden, wobei das System (2) Folgendes aufweist:
- eine Einheit zum Überwachen eines Ladestands der Einheit zum Speichern elektrischer Energie (10), um einen Antriebsmodus durch den Verbrennungsmotor (6) oder den Elektromotor (6) auszuwählen,
- eine Einheit zum Bestimmen eines Streckenprofils des Fahrzeugs, das mit einer Fahrstrecke des Fahrzeugs verbunden ist;
- eine Einheit zum Bestimmen in Abhängigkeit von dem Streckenprofil eines Schwellenladestandes (S1, S2, S3), dem sogenannten zugelassenen Schwellenwert, unter dem ein Antriebsmodus durch den Verbrennungsmotor (6) aktiviert wird,
wobei das Bestimmen des Streckenprofils das Bestimmen (30, 32) der Entfernung (d), der Zeitdauer (t) und der Art der Fahrstrecke zwischen einem definierten Ausgangspunkt und einem definierten Ankunftspunkt aufweist, und
die Art der Fahrstrecke aus mindestens einer Fahrstrecke, die einen außerstädtischen Abschnitt (PE) aufweist, und einer Fahrstrecke, die keinen außerstädtischen Abschnitt (PE) aufweist, ausgewählt ist, und
der Schritt des Bestimmens des Streckenprofils das Bestimmen (30) der Entfernung (d) und der Zeitdauer (t) der Fahrstrecke aufweist, und die Art der Fahrstrecke ausgehend von der Durchschnittsgeschwindigkeit (Vmittel) auf der Fahrstrecke bestimmt wird (32), wobei die Durchschnittsgeschwindigkeit (Vmittel) aus dem Abstand (d) und der Zeitdauer (t) erhalten wird.

13. System nach Anspruch 12, wobei die Einheit zum Bestimmen eines Streckenprofils eine Lokalisierungsvorrichtung (16), insbesondere ein GPS und/oder eine Kartographie, aufweist.

14. System nach dem Anspruch 12 oder 13, ferner umfassend eine Einheit zur Kommunikation mit einem Benutzer des Fahrzeugs, insbesondere eine Mensch-Maschine-Schnittstelle (12).

## Claims

1. Power management method for a hybrid vehicle selectively driven by an electric motor (8) and by a heat engine (6), the electric motor (8) being supplied with power by a unit (10) for storing electrical power able to be recharged by the heat engine (6), method in which a charge level of the power storage unit (10) is monitored in order to select a heat engine (6) or electric motor (8) drive mode, said method comprising steps of:
- evaluating a route profile for the vehicle, associated with a trip of said vehicle; and
- evaluating (36, 66), depending on said route profile, a threshold charge level (S1, S2, S3) called the authorized threshold, below which a heat engine (6) drive mode is activated,
in which the step of evaluating the route profile comprises evaluating (30, 32) the trip distance (d), the trip time (t) and the nature of the trip, between a specified starting point and a specified endpoint, and the nature of the trip is chosen from at least one trip comprising an extra urban portion (PE) and one trip not comprising an extra urban portion (PE), and
the step of evaluating the route profile comprises evaluating (30) the trip distance (d) and the trip time (t), and the nature of the trip is evaluated (32) from the average speed (Vmoy) of the trip, said average speed (Vmoy) being obtained from said distance (d) and said time (t).

2. Method according to Claim 1, comprising a step of requesting the recharge of the storage unit (10) if the charge level drops below the authorized threshold (S1, S2, S3), said recharge request comprising a request that the heat engine (6) turn on.

3. Method according to Claim 1, in which the nature of the trip is evaluated from the speed profile of the trip.

4. Method according to Claim 1, in which, if the average speed (Vmoy) of the trip is higher than an average speed threshold (Vseuil), the trip comprises an extra urban portion (PE); and
if the average speed (Vmoy) is lower than the average speed threshold (Vseuil), the trip does not comprise an extra urban portion (PE).

5. Method according to any one of Claims 1 to 4, in which, when the trip comprises an extra urban portion (PE), the evaluation of the route profile comprises evaluating (65) the trip time (Δt) between the starting point and the start of the extra urban portion (PE),
the evaluation (66) of the authorized threshold consisting in setting said authorized threshold to a first threshold (S1) for this time (Δt) and setting said authorized threshold to a second threshold (S2) higher than the first threshold (S1) after this time (Δt).

6. Method according to Claim 5, in which the first threshold (S1) is comprised between 20% and 30%.

7. Method according to either of Claims 5 and 6, in which the second threshold (S2) is comprised between 60% and 80%.

8. Method according to one of Claims 5 to 7, in which the authorized threshold is equal to a third threshold (S3) higher than or equal to the first threshold (S1) and lower than the second threshold (S2), when the trip does not comprise an extra urban portion (PE).

9. Method according to Claim 8, in which the third threshold (S3) is comprised between 40% and 50%.

10. Method according to any one of Claims 1 to 9, in which the starting point and/or the endpoint are defined by their geographical coordinates, especially their GPS coordinates.

11. Method according to Claim 10, in which the endpoint is input by a user (14).

12. Power management system (2) for a hybrid vehicle selectively driven by an electric motor (8) and by a heat engine (6), the electric motor (8) being supplied with power by a unit (10) for storing electrical power able to be recharged by the heat engine (6), said system (2) comprising:
- a unit for monitoring a charge level of the power storage unit (10) in order to select a heat engine (6) or electric motor (6) drive mode;
- a unit for evaluating a route profile for the vehicle, associated with a trip of said vehicle; and
- a unit for evaluating a threshold charge level (S1, S2, S3) called the authorized threshold, below which a heat engine (6) drive mode is activated, depending on said route profile; and
the evaluation of the route profile comprises evaluating (30, 32) the trip distance (d), the trip time (t) and the nature of the trip, between a specified starting point and a specified endpoint; and
the nature of the trip is chosen from at least one trip comprising an extra urban portion (PE) and one trip not comprising an extra urban portion (PE); and the step of evaluating the route profile comprises evaluating (30) the trip distance (d) and the trip time (t), and the nature of the trip is evaluated (32) from the average speed (Vmoy) of the trip, said average speed (Vmoy) being obtained from said distance (d) and said time (t).

13. System according to Claim 12, in which the unit for evaluating a route profile comprises a tracking device (16), especially a GPS and/or a map.

14. System according to Claim 12 or 13, furthermore comprising a unit for communicating with a user of the vehicle, in particular a human-machine interface (12).
